Europäisches Patentamt

European Patent Office

Office européen des brevets

(19)

(11) EP 0 613 012 B1

(12) FASCICULE DE BREVET EUROPEEN

(45) Date de publication et mention
de la délivrance du brevet:
**23.07.1997 Bulletin 1997/30**

(51) Int Cl.⁶: **G01P 15/13**

(21) Numéro de dépôt: **94410002.3**

(22) Date de dépôt: **17.01.1994**

(54) **Accéléromètre capacitif à circuit de correction de l'effet pertubateur de capacités parasites**

Kapazitiver Beschleunigungsmesser mit Schaltung zur Korrektur des störender Einflusses parasitärer Kapazitäten

Capacitive accelerometer with circuit for correcting the disturbing effects of parasitic capacitances

(84) Etats contractants désignés:
**CH DE FR GB IT LI**

(30) Priorité: **19.01.1993 FR 9300752**

(43) Date de publication de la demande:
**31.08.1994 Bulletin 1994/35**

(73) Titulaire: **SEXTANT Avionique
F-92366 Meudon la Forêt Cedex (FR)**

(72) Inventeur: **Torregrosa, Michel
F-26760 Beaumont les Valence (FR)**

(74) Mandataire: **de Beaumont, Michel
1bis, rue Champollion
38000 Grenoble (FR)**

(56) Documents cités:
**EP-A- 0 299 825          EP-A- 0 369 352
DE-A- 3 831 593          GB-A- 2 249 396
US-A- 3 877 313**

## Description

La présente invention a trait à des accéléromètres comportant un détecteur d'accélération capacitif en silicium, et un système de mesure du déséquilibre capacitif du détecteur, fournissant un signal électrique représentatif de l'accélération.

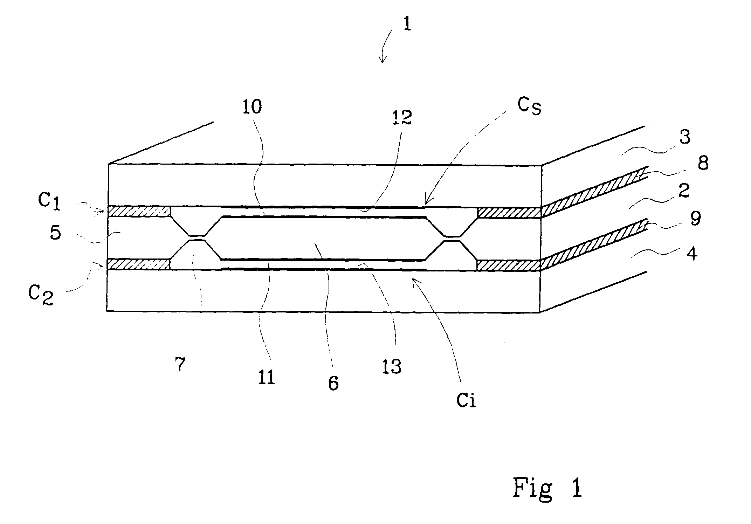

Un exemple très schématique de détecteur d'accélération capacitif en silicium est illustré par la vue en coupe de la figure 1. Le détecteur 1 comprend une plaquette de silicium centrale 2 prise en sandwich entre deux plaquettes de silicium externes 3,4. La plaquette de silicium centrale 2 est gravée avant assemblage de manière à comprendre un cadre 5 et une plaque centrale, ou masse mobile 6, fixée au cadre 5 par un ou plusieurs bras de suspension 7. L'isolement du cadre 5 de la plaquette centrale vis-à-vis des plaquettes externes 3,4 est assuré par des bandes isolantes 8,9 généralement constituées d'oxyde de silicium. Les plaquettes externes 3,4 délimitent avec le cadre 5 un espace au sein duquel se trouve suspendue la masse mobile 6. Les faces supérieures et inférieures de la masse mobile 6 ainsi que les faces des plaquettes 3,4 en regard de la masse mobile comportent des surfaces conductrices, ou électrodes 10,11,12,13, formant un système de deux condensateurs Cs,Ci symétriques par rapport au plan médian du détecteur 1. L'accès aux électrodes 10 à 13 est réalisé au moyen de plots de contacts et de liaisons internes, non représentés sur la figure 1. Le plus souvent, les électrodes mobiles 10,11 ne sont pas isolées de la masse mobile 6 (il s'agit alors de zones dopées du silicium) et sont au même potentiel électrique, de sorte qu'il n'est prévu qu'un seul plot de contact pour ces deux électrodes.

Lorsque le dispositif est au repos, les capacités Cs et Ci prennent sensiblement la même valeur et ont pour expression :

$$Cs = Ci = \frac{\varepsilon\, S}{do}$$

$\varepsilon$ étant la constante électrique du gaz présent dans le détecteur 1, S étant la surface des électrodes 10 à 13, et do la distance séparant, au repos, la masse mobile 6 de chacune des plaquettes de silicium externes 3,4.

Quand le dispositif est soumis à une accélération, la masse mobile 6 se déplace, par rapport à sa position de repos, d'une quantité z proportionnelle à l'accélération. Dans ce cas, les capacités Cs,Ci varient et prennent les valeurs suivantes :

$$(1) \qquad Cs = \frac{\varepsilon\, S}{do + z}$$

$$(2) \qquad Ci = \frac{\varepsilon\, S}{do - z}$$

z étant une longueur exprimée algébriquement, dont le signe est déterminé par convention.

Pour mesurer l'accélération, on associe au détecteur 1 décrit ci-dessus un système de mesure du déséquilibre des condensateurs Cs,Ci.

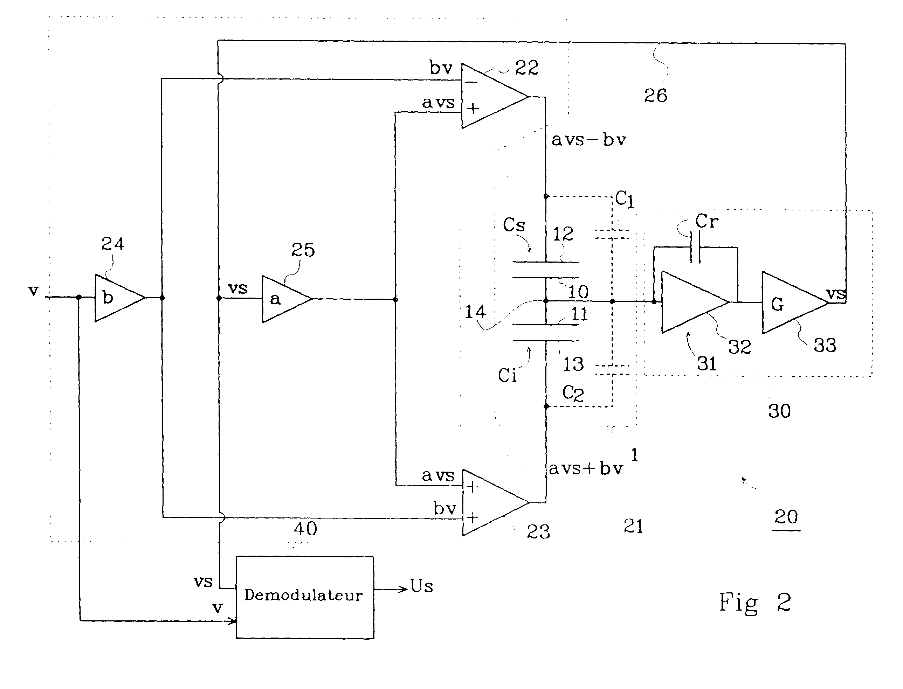

La figure 2 représente le schéma électrique d'un accéléromètre classique 20 comprenant le détecteur 1 déjà décrit et un tel système de mesure. Le détecteur 1 est représenté par les deux condensateurs Cs,Ci formés par les électrodes 10,12 et 11,13, le plot commun aux électrodes 10,11 étant matérialisé par un noeud 14. Le système de mesure comprend un étage 21 d'excitation des condensateurs Cs,Ci, alimenté par une tension alternative de référence v, un étage 30 de traitement du signal issu du détecteur, délivrant une tension de mesure vs, et une boucle de réaction 26 amenant la tension vs en entrée de l'étage d'excitation 21.

L'étage d'excitation 21 attaque l'électrode fixe 12 du condensateur Cs au moyen d'un amplificateur différentiel 22, et l'électrode fixe 13 du condensateur Ci au moyen d'un amplificateur additionneur 23. L'entrée négative de l'amplificateur 22 et une première entrée de l'amplificateur 23 sont reliées à un amplificateur 24 de gain b, recevant en entrée la tension de référence v. L'entrée positive de l'amplificateur 22 et l'autre entrée de l'amplificateur 23 sont reliées à la sortie d'un amplificateur 25 de gain a, recevant en entrée la tension vs délivrée par l'étage de traitement 30, amenée sur l'étage d'excitation par la boucle de réaction 26.

L'étage de traitement 30 comprend essentiellement un convertisseur courant/tension 31 dont l'entrée est reliée au noeud 14, suivi d'un amplificateur 33 présentant un gain G très élevé, délivrant la tension de mesure vs. Sur la figure 2, le convertisseur 31 est représenté schématiquement par un amplificateur opérationnel 32 dont la sortie est ramenée en entrée par un condensateur de capacité Cr.

La tension vs est utilisée comme tension de sortie du système de mesure. Elle est redressée dans un démodulateur 40 relié à la sortie de la boucle 26 et synchronisé à la tension v, qui délivre une tension Us constituant le signal de sortie de l'accéléromètre.

D'après ce qui vient d'être décrit, on voit que l'étage d'excitation 21 applique sur les électrodes fixes 12,13 des condensateurs Cs,Ci des tensions d'excitation ayant pour expressions respectives avs-bv et avs+bv. L'entrée du convertisseur courant/tension 31 recueille un courant différentiel issu du noeud 14 et dû à l'excitation des condensateurs Cs,Ci. A la sortie de l'étage de traitement 30, la tension vs est de la forme:

$$(3) \qquad vs = K \frac{Cs - Ci}{Cs + Ci},$$

K étant une constante.

L'avantage théorique d'un tel système de mesure est que l'amplitude de la tension vs est proportionnelle au déplacement z de la masse mobile 6 du détecteur, et par conséquent à l'accélération. En combinant (1),(2) et(3), on voit en effet que vs = K z/do

Un accéléromètre similaire est décrit dans DE-A-38 31 593.

Cependant, dans cet accéléromètre de l'art antérieur, la mesure des déplacements de la masse mobile est en réalité fortement affectée par la présence de capacités parasites élevées présentes dans le détecteur, de sorte que le signal de sortie Us obtenu par démodulation de la tension vs est entaché d'erreurs. On constate ainsi que le signal de sortie n'augmente pas de façon linéaire lorsque l'accélération croît, contrairement à ce que prévoit le résultat théorique (3) décrit ci-dessus. Ces capacités parasites se forment essentiellement au niveau des couches isolantes 8,9, entre le cadre 5 de la plaquette médiane 2 et les surfaces correspondantes des plaquettes externes 3,4, et sont désignées par C1, C2 en figure 2.

Pour pallier cet inconvénient, on a déjà proposé diverses solutions d'ordre technologique, visant à modifier la structure du détecteur afin de diminuer les capacités parasites. Cependant ces solutions technologiques se traduisent par une augmentation du coût de revient et/ou de la complexité du détecteur.

La demanderesse propose une solution tout à fait différente, consistant à réduire l'influence des capacités parasites dans le système de mesure, plutôt que modifier la structure des détecteurs connus.

Ainsi, un objet de la présente invention est de prévoir un accéléromètre dans lequel l'effet perturbateur des capacités parasites sur la linéarité du signal de sortie est compensé.

Pour atteindre cet objet, la présente invention prévoit un accéléromètre comprenant un détecteur capacitif en silicium formant un système de deux condensateurs variables dont le déséquilibre capacitif est fonction de l'accélération, les condensateurs étant perturbés par des capacités parasites en parallèle, un système électronique de mesure du déséquilibre capacitif du détecteur, délivrant une tension de sortie représentative de l'accélération et comprenant, un étage d'excitation, pour appliquer aux condensateurs des tensions d'excitation élaborées par combinaison pondérée d'une tension de référence et de la tension de sortie, un étage convertisseur courant/tension, pour recueillir des courants issus de chacun des condensateurs, délivrant une tension de mesure, une boucle de réaction, pour ramener sur l'étage d'excitation la tension de mesure, la tension de sortie étant prélevée à la sortie de la boucle de réaction, accéléromètre comprenant un étage de compensation de l'effet perturbateur des capacités parasites, agencé pour injecter dans le système de mesure un signal électrique de correction élaboré à partir des tensions de référence et de mesure et choisi de manière que la tension de sortie soit sensiblement proportionnelle au rapport de la différence à la somme des capacités des condensateurs.

Selon un mode de réalisation de la présente invention, l'étage de compensation injecte dans la boucle de réaction une tension de correction choisie pour que la tension de sortie soit égale à la somme pondérée des tensions de mesure et de référence, les coefficients de pondération de la somme pondérée étant des paramètres de réglage de l'étage de compensation.

Avantageusement, l'étage de compensation comprend un amplificateur opérationnel disposé en série dans la boucle de réaction et monté en additionneur, la sortie de l'amplificateur étant ramenée sur son entrée par une première résistance, les tensions de mesure et de référence étant amenées sur cette même entrée par l'intermédiaire respectivement d'une deuxième et troisième résistance, le rapport de la première à la deuxième résistance et le rapport de la première à la troisième résistance constituant les paramètres de réglage de l'étage de compensation.

Les tensions de référence, de mesure et de sortie peuvent être des tensions périodiques, ou des tensions continues. Dans ce dernier cas, l'étage d'excitation comprend des interrupteurs de découpage des tensions d'excitation appliquées aux condensateurs, l'étage convertisseur comprend un convertisseur courant/tension suivi d'un démodulateur.

Selon un autre mode de réalisation de la présente invention, l'étage de compensation injecte en entrée de l'étage convertisseur un courant de correction s'ajoutant aux courants recueillis issus des condensateurs, et choisi pour annuler le courant dû à l'excitation des capacités parasites.

Avantageusement, le courant de correction est issu de deux condensateurs de compensation excités par des tensions respectivement égales à la différence et à la somme d'une tension proportionnelle à la tension de référence et d'une tension proportionnelle à la tension de mesure, les tensions d'excitation des condensateurs de compensation constituant des paramètres de réglage de l'étage de compensation.

Avantageusement encore, les tensions de référence, de sortie et de mesure sont des tensions continues, les tensions d'excitation des condensateurs du détecteur et des condensateurs de compensation étant découpées par des interrupteurs fonctionnant en opposition de phase, l'étage convertisseur comprenant un convertisseur courant/ tension suivi d'un démodulateur de gain statique très élevé.

De préférence, les condensateurs de compensation comprennent un sandwich d'une couche d'oxyde de silicium et de deux plaquettes de silicium.

Ces objets, caractéristiques et avantages ainsi que d'autres de la présente invention seront exposés en détail dans la description suivante du procédé de la présente invention et de modes de réalisation particuliers, faite en relation avec les figures jointes parmi lesquelles :

- les figures 1 et 2, décrites précédemment, représentent une vue en coupe schématique d'un détecteur capacitif en silicium, et le schéma électrique d'un accéléromètre de l'art antérieur,

- la figure 3a est un schéma électrique sous forme de blocs d'un accéléromètre selon la présente invention,

- la figure 3b illustre plus en détail un bloc du schéma de la figure 3a,

- la figure 3c est un schéma électrique de principe du bloc de la figure 3b,

- la figure 4 représente une variante de réalisation de l'accéléromètre de la figure 3a, et

- la figure 5 est un schéma électrique d'un autre mode de réalisation d'un accéléromètre selon la présente invention.

Suivant l'invention, on analyse tout d'abord les perturbations crées par les capacités parasites dans un accéléromètre de l'art antérieur. On prendra pour exemple l'accéléromètre 20 illustré en figure 2 et décrit au préambule. Comme on le voit sur la figure 2, les capacités parasites peuvent être représentées par un condensateur C1 en parallèle avec le condensateur Cs et d'un condensateur C2 en parallèle avec le condensateur Ci, de sorte que les tensions d'excitation (avs - bv, avs + bv) appliquées à Cs et Ci agissent également sur C1 et C2. Dans ces conditions, la relation "vraie" donnant la tension de sortie vs est la suivante :

$$(4) \qquad \frac{Cr}{G} \text{ vs = avs (Cs+Ci) - bv (Cs-Ci) + avs (C1+C2) - bv(C1-C2)}$$

En négligeant l'effet perturbateur introduit par les capacités parasites (c'est à dire en considérant que C1 = C2 = O), et en choisissant un amplificateur 25 de gain G très élevé, la relation (4) se simplifie et on retrouve bien la relation (3) de l'art antérieur :

$$(3) \qquad \text{vs = K } \frac{(Cs - Ci)}{(Cs + Ci)}, \text{ avec K =} \frac{b}{a}v.$$

Comme on l'a expliqué plus haut, la relation (3) est représentative de la linéarité de la tension de sortie vs ou en d'autres termes du rapport de proportionnalité entre l'amplitude de la tension de sortie vs et les déplacements z de la masse mobile. La relation (3) signifie également que les capacités de mesures sont excitées à charge constante, et qu'aucune force électrostatique parasite n'est crée, susceptible d'attirer la masse mobile vers les électrodes fixes et perturber la linéarité de la tension de sortie vs.

Ainsi, la présente invention vise principalement à rétablir la relation (3) dans le système défini par la relation (4), où les capacités parasites C1,C2 sont prises en compte.

Pour atteindre ce résultat, la présente invention prévoit d'ajouter à l'accéléromètre de l'art antérieur un étage de compensation injectant dans le système de mesure un signal électrique de correction de l'effet perturbateur des capacités parasites. On décrira ci-après deux modes de réalisation de la présente invention. Selon le premier mode de réalisation, le signal de correction est une tension, introduite en amont des condensateurs de détection Cs,Ci et mélangée aux tensions d'excitation de Cs et Ci. Dans le second mode de réalisation, le signal de correction est un courant, introduit en aval des condensateurs Cs,Ci, à l'entrée de l'étage de traitement 30.

**PREMIER PROCEDE : ajout d'un étage de compensation en tension dans le système de mesure.**

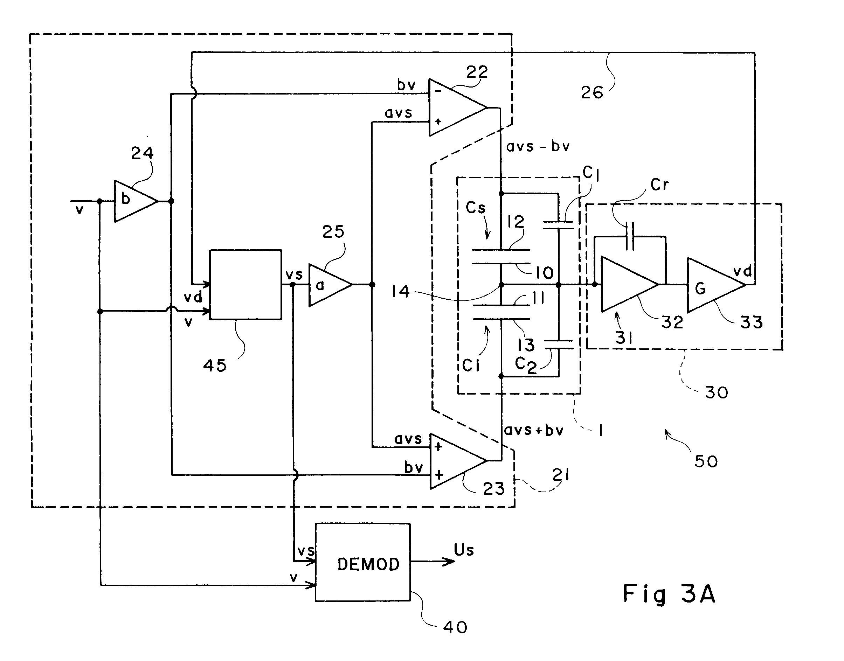

La figure 3a représente le schéma électrique d'un accéléromètre 50 selon la présente invention, qui ne diffère de l'accéléromètre classique de la figure 2 qu'en ce qu'il comprend un étage de compensation 45. Dans un souci de simplicité, les éléments communs à la figure 2 sont désignés par les mêmes références et ne seront pas à nouveau décrits.

L'étage de compensation 45 est introduit dans la boucle de réaction 26 amenant sur l'étage d'excitation 21 la tension de mesure délivrée par l'étage de traitement 30, maintenant désignée par le terme vd, la tension de sortie vs étant prise à la sortie de la boucle 26, après l'étage de compensation 45, et appliquée de façon classique à l'amplificateur 25 et au démodulateur 40. Ainsi, l'étage de compensation 45 réalise la fonction f suivante :

$$vs = f(vd).$$

Dans ces conditions, la relation (4) décrite plus haut s'applique à la tension vd et s'exprime comme suit :

$$(5) \qquad \frac{Cr}{G} vd = avs\ (Cs+Ci) - bv\ (Cs-Ci) + avs\ (C1+C2) - bv(C1-C2)$$

Pour compenser l'effet perturbateur des capacités parasites, la présente invention prévoit que la relation (6) suivante soit réalisée par l'étage de compensation 45 :

$$(6) \qquad \frac{Cr}{G} vd = avs\ (C1+C2) - bv\ (C1-C2),$$

Dans ce cas, en combinant (5) et (6), on voit que la relation (5) se simplifie et devient :

$$(5) \qquad avs\ (Cs + Ci) - bv\ (Cs - Ci) = 0, \text{ soit :}$$

$$(5) \qquad vs = \frac{bv}{a}\ \frac{(Cs - Ci)}{(Cs + Ci)}.$$

La relation (5) devient équivalente à la relation (3) et la linéarité de la tension de sortie vs est retrouvée malgré la présence de capacités parasites, vs étant proportionnelle aux déplacements z de la masse mobile et par conséquent à l'accélération.

On voit donc que l'effet perturbateur des capacités parasites dans le système de mesure est neutralisé lorsque la relation (6) est réalisée. On arrange la relation (6) de manière à faire apparaître la fonction vs = f(vd) de l'étage de compensation 45 :

$$(6) \qquad vs = f(vd) = \frac{vd}{aG}\ \frac{Cr}{(C1 + C2)} + \frac{bv}{a}\ \frac{(C1 - C2)}{(C1 + C2)},$$

ou, sous une forme simplifiée :

$$(6)\ vs = Avd + Bv,$$

avec

$$A = \frac{1}{aG}\ \frac{Cr}{(C1+C2)}\ \text{ et } B = \frac{b}{a}\ \frac{(C1 - C2)}{(C1 + C2)},$$

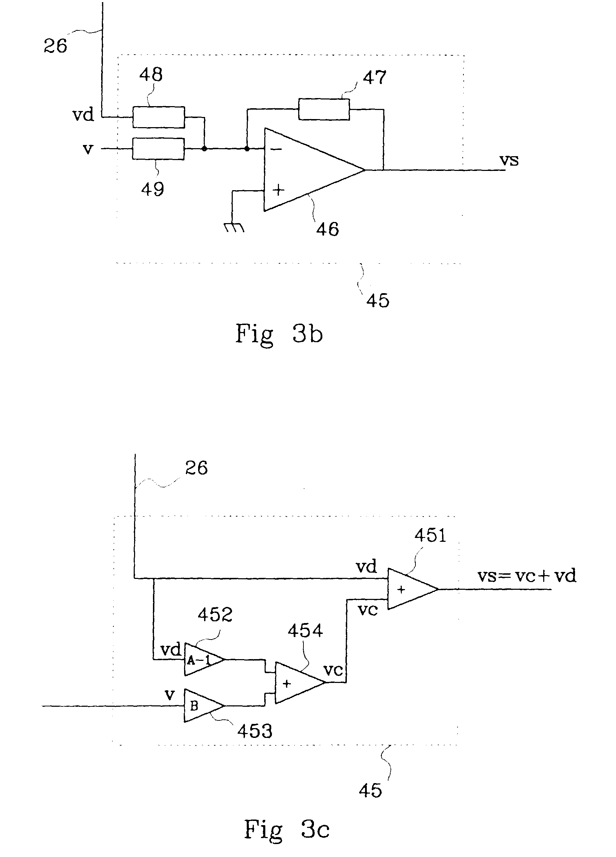

Un exemple de réalisation de l'étage de traitement 45 est illustré schématiquement sur la figure 3 b. L'étage 45 comprend un amplificateur opérationnel 46 dont la sortie est ramenée sur l'entrée négative par une résistance 47. Les tensions vd et v sont appliquées à l'entrée de l'amplificateur 46 par l'intermédiaire de résistances 48 et 49, respectivement. Les résistances 47, 48 et 49 sont ajustées de manière que :

$$\frac{R\ 47}{R\ 48} = A \text{ et } \frac{R\ 47}{R\ 49} = B$$

Dans la pratique l'étage 45 peut être ajusté par étalonnage sur un banc d'essai, ou par construction, après détermination théorique ou expérimentale des capacités parasites.

En examinant les expressions des gains A et B de l'étage de compensation 45, l'homme du métier constatera qu'il n'est pas nécessaire que l'amplificateur 33 ait ici un gain G très élevé. En effet, la relation (3) exprimant la linéarité de la tension de sortie vs ne dépend plus du terme G. En définitive, le gain G, le gain a de l'amplificateur 25, ainsi que le gain b de l'amplificateur 24 sont des paramètres de réglage de l'accéléromètre. Un mode de réalisation particulièrement simple consiste à prendre a, b, et G égaux à 1.

Par ailleurs, pour que l'accéléromètre 50 fonctionne correctement, la tension avs doit être parfaitement en phase avec les tensions bv et -bv. Il est à la portée de l'homme du métier de faire en sorte que la somme des déphasages introduits par les différents éléments de l'accéléromètre 50 conduisent à ce résultat.

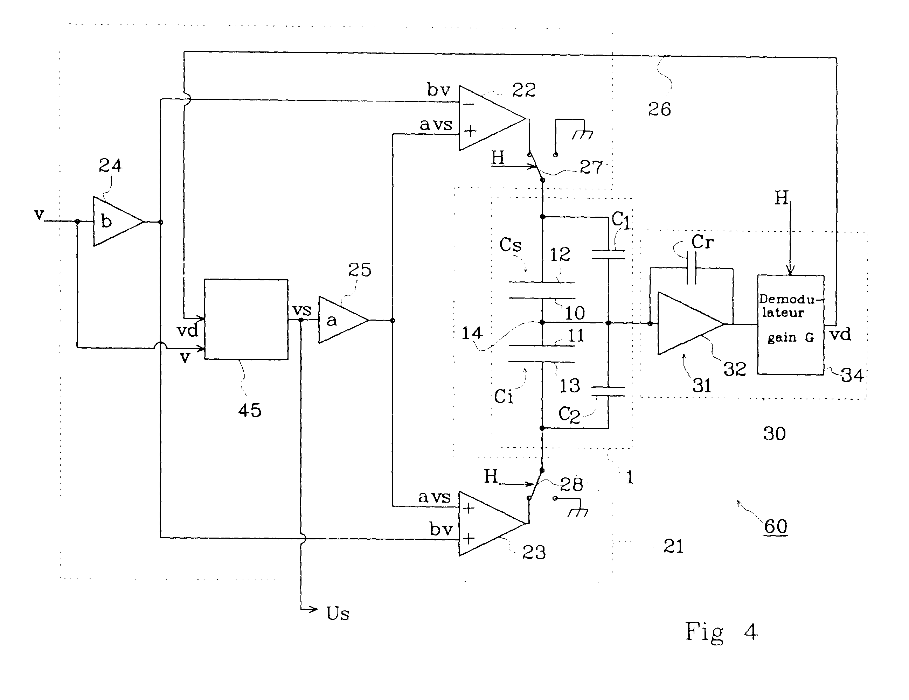

La figure 4 représente un accéléromètre 60 qui est une variante de réalisation de celui de la figure 3a, présentant l'avantage supplémentaire de ne pas être sensible à d'éventuels problèmes de phases. Dans l'accéléromètre 60, les diverses tensions vs, v, avs, bv, et vd sont des tensions continues. Les différents éléments composant l'étage d'excitation du système de la figure 3a sont conservés, et sont désignés sous les mêmes références. Les amplificateurs 22,23 de l'étage d'excitation 21 délivrent des tensions continues avs - bv, avs + bv, respectivement. Ces tensions sont hachées par des interrupteurs 27,28 (par exemple des transistors MOS) commandés par un signal d'horloge H, avant d'être appliqués sous forme de créneaux aux condensateurs Cs,Ci. L'étage de traitement 30 recevant le courant issu des condensateurs Cs,Ci comprend le convertisseur courant/tension 31 déjà décrit, l'amplificateur 33 étant remplacé par un démodulateur 34 présentant un gain statique G, synchronisé au signal d'horloge H. La tension vd issue du démodulateur 34 est appliquée à l'étage de compensation 45 selon l'invention, déjà décrit en relation avec la figure 3b, fonctionnant ici en mode continu. La tension de sortie vs issue de l'étage de compensation 45 est directement utilisable comme signal de sortie Us.

L'accéléromètre 60 fonctionne de la même manière que l'accéléromètre 50 de la figure 3a, les relations (5) et (6) décrites plus haut étant toujours valables.

On remarquera par ailleurs que la fonction vs = f(vd) réalisée par l'étage de compensation 45 équivaut à ajouter au signal de mesure vd délivré par l'étage de traitement 30, un signal de correction vc = (A-1)vd+Bv, qui, combiné à la tension vd, donne la tension vs. Ainsi, on peut représenter l'étage de compensation 45 par le schéma de principe montré en figure 3c, dans lequel l'étage 45 comprend un premier amplificateur 452 de gain A - 1, recevant en entrée vd, un deuxième amplificateur 453 de gain B, recevant en entrée v, et un amplificateur additionneur 454 recevant en entrée les sorties des amplificateurs 452,453 et délivrant le signal de correction vc, vc étant injecté dans la boucle de réaction 26 au moyen d'un additionneur 451 recevant en entrée vc et vd.

**SECOND PROCEDE : ajout d'un étage de compensation en courant dans le système de mesure.**

On rappelle que la relation (4) décrite plus haut définit l'expression "vraie" de la tension de sortie d'un système de mesure classique, en présence de capacités parasites C1, C2.

Dans ce mode de réalisation de l'invention, on injecte en entrée de l'étage de traitement un courant I, pour que la relation (4) soit modifiée et devienne :

$$(7) \qquad \frac{Cr}{G} \, vs = avs \, (Cs+Ci) - bv \, (Cs-Ci) + avs \, (C1+C2) - bv(C1-C2) - I$$

Pour neutraliser l'effet perturbateur des capacités parasites, on prévoit que I soit égal à :

$$(8) \qquad I = avs \, (C1 + C2) - bv \, (C1 - C2)$$

(Dans un souci de simplicité, on a supprimé dans les relations (7) et (8) le terme classique exprimant la périodicité des signaux, par exemple $\omega$ si les signaux sont sinusoïdaux. Ainsi, le terme I a la dimension d'un courant divisé par un terme de périodicité, et représente une charge électrique).

Avantageusement, on prévoit aussi que le courant I soit délivré par deux condensateurs de compensation Cn1,Cn2, excités par des tensions d'expression cvs-dv et cvs+dv, respectivement, c et d étant des coefficients de réglage. De cette manière, I a pour expression :

$$(9) \qquad I = cvs \, (Cn1 + Cn2) - dv \, (Cn1 - Cn2).$$

Au moyen des coefficients de réglage c et d, et éventuellement a et b, on fait en sorte que la relation (8) soit vérifiée. Dans ce cas, dans la relation (7), les termes en C1 et C2 sont supprimés par le courant de compensation I. Si G est choisi très grand, la relation (7) devient :

$$(10) \qquad avs\,(Cs + Ci) - bv\,(Cs - Ci) = 0.$$

On voit que (10) = (3) et que la linéarité de la tension de sortie vs est atteinte.

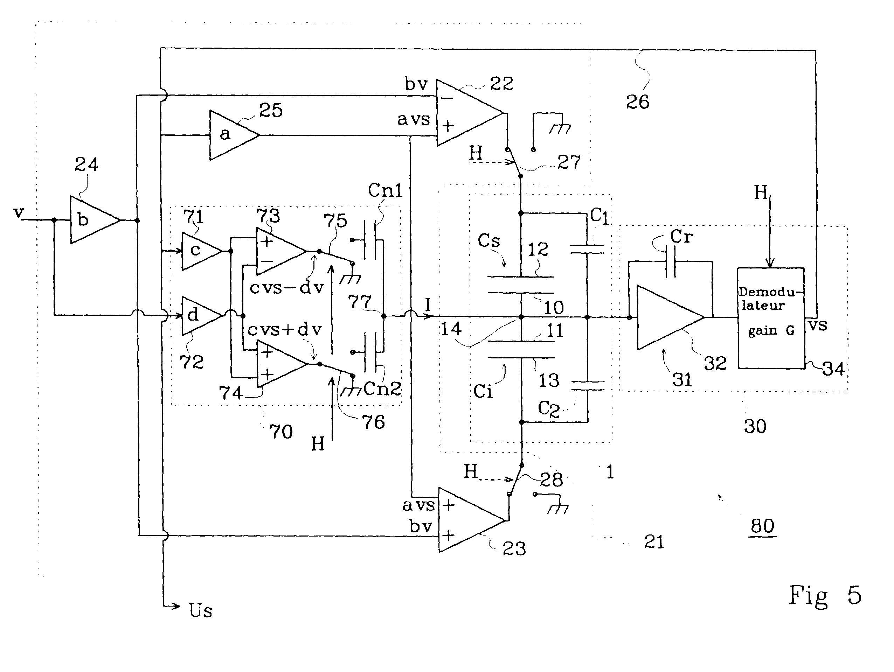

La figure 5 représente le schéma électrique d'un accéléromètre 80 comportant un étage 70 de compensation en courant. L'accéléromètre 80 comprend l'étage d'excitation 21 et l'étage de traitement 30 déjà décrits, fonctionnant ici par découpage de tensions continues. Ainsi, les amplificateurs 22,23 attaquent les condensateurs Cs,Ci par l'intermédiaire des deux interrupteurs 27,28 synchronisé au signal d'horloge H, et l'étage de traitement 30 comprend le démodulateur 34, qui présente ici un gain statique G très élevé. La tension de référence v de l'étage d'excitation 21 appliqué à l'amplificateur 24 est une tension continue, et la tension vs délivrée par le démodulateur 34 fait office de signal de sortie Us de l'accéléromètre 80.

L'étage de compensation 70 selon l'invention est monté en parallèle avec l'étage d'excitation 21 et le détecteur 1. Il reçoit en entrée la tension vs, amenée par la boucle de réaction 26 et la tension de référence v. Sa sortie est reliée au noeud 14, c'est à dire à l'entrée de l'étage de traitement 30, et délivre un courant I de correction de l'effet perturbateur des capacités parasites. L'étage 70 comprend, en entrée, un amplificateur 71 de gain c, recevant la tension vs et un amplificateur 72 de gain d, recevant la tension v. La sortie de l'amplificateur 71 est reliée à l'entrée positive d'un amplificateur différentiel 73 et à une entrée d'un amplificateur additionneur 74. La sortie de l'amplificateur 72 est reliée à l'entrée négative de l'amplificateur 73 et à l'autre entrée de l'amplificateur 74. La sortie de l'amplificateur 73 attaque un premier condensateur de compensation Cn1 par l'intermédiaire d'un interrupteur hacheur 75, et la sortie de l'amplificateur 74 attaque un second condensateur de compensation Cn2 par l'intermédiaire d'un interrupteur-hacheur 76. Les interrupteurs 75,76 sont synchronisés au signal d'horloge H et fonctionnent en opposition de phase avec les interrupteurs 27,28 de l'étage d'excitation 21. Les extrémités des condensateurs Cn1,Cn2 sont reliées à un noeud 77 qui constitue la sortie de l'étage de compensation 70, le noeud 77 étant relié au noeud 14.

En observant le schéma électrique de l'étage de compensation 70, on remarquera que celui-ci constitue en quelque sorte une copie de l'étage d'excitation 21 et du détecteur 1 et fonctionne de la même façon. En effet, les amplificateurs 73,74 de l'étage de compensation délivrent des tensions continues cvs - dv et cvs + dv hachées par les interrupteurs 75,76 avant d'être appliqués aux condensateurs Cn1,Cn2, et de façon semblable les amplificateurs 22,23 de l'étage d'excitation délivrent des tensions continues avs - bv et avs + bv hachées par les interrupteurs 27,28 avant d'être appliquées aux condensateurs Cs,Ci. Au noeud 14, on retrouve donc la somme d'un courant dû à l'excitation de Cs et Ci et d'un courant parasite dû à l'excitation de C1 et C2, à laquelle se retranche la valeur du courant de compensation I (en opposition de phase) délivré par l'étage 70, dû à l'excitation de Cn1 et Cn2 (le courant I est défini par la relation (9)).

L'expression de la tension de sortie vs délivrée par l'accéléromètre 80 est donnée par la relation (7) et dépend ainsi de la somme des courants au noeud 14. Comme on l'a expliqué précédemment, on neutralise l'effet des capacités parasites dans l'accéléromètre 80 en choisissant les paramètres a,b,c,d de manière que l'égalité exprimée par la relation (8) soit atteinte. Tout comme l'étage de compensation en tension décrit en relation avec les figures 3a et 4, l'étage de compensation en courant de la figure 5 peut être ajusté par étalonnage sur un banc d'essai, ou par construction, après détermination théorique ou expérimentale des capacités parasites.

Un mode de réalisation particulièrement avantageux l'étage de compensation 70 consiste à prévoir des condensateurs de compensation Cn1,Cn2 de même technologie que le détecteur, et ayant de préférence des capacités voisines de C1 et C2 afin de présenter les mêmes dérives thermiques. Ainsi, le système est correctement compensé quelle que soit sa température de fonctionnement.

L'homme du métier notera que l'accéléromètre 80 fonctionne également avec des tensions v et vs périodiques. Dans ce cas, on supprime les interrupteurs de découpage 27,28,75,76 et on remplace le démodulateur 34 par un amplificateur de gain G très élevé. Il faut aussi déphaser le courant I de 180° et démoduler la tension de sortie vs pour obtenir Us.

Dans la pratique, les différents systèmes selon la présente invention procurent de très bons résultats. Des expériences effectuées par la demanderesse ont montré que les systèmes de compensation en tension permettent d'effectuer des corrections de non linéarité du signal de sortie de l'accéléromètre de l'ordre de 90 % sur une gamme de température allant de -55° à +125°C, les systèmes de compensation en courant permettant d'atteindre une correction de l'ordre de 95 % grâce à l'emploi de condensateurs de compensation Cn1, Cn2 de même technologie que le détecteur 1. Ce dernier type de système est un peu plus couteux à réaliser, tout en restant cependant plus avantageux que les solutions de l'art antérieur, qui consistent à modifier la structure du détecteur pour diminuer C1 et C2.

La présente invention est susceptible de diverses variantes et modifications, notamment en ce qui concerne l'exécution pratique des schémas électriques, qui n'ont été donnés qu'à titre d'exemple.

On a considéré dans ce qui précède que le signal de sortie Us de l'accéléromètre est de nature électrique. Dans la pratique, on peut ajouter à l'accéléromètre des moyens de transformation du signal de sortie en un signal d'une autre nature, par exemple optique, ou des moyens de codage du signal de sortie.

La présente invention peut en outre s'appliquer aux détecteurs comportant plusieurs paires de condensateurs de mesure disposées en parallèle, ce genre de détecteurs étant électriquement équivalents à un détecteur à deux condensateurs.

Enfin, il apparaîtra clairement à l'homme du métier que les deux modes de compensation -tension ou courant- prévus par la présente invention sont équivalent tant dans le résultat qu'il procurent que dans la fonction qu'ils réalisent. En effet, l'analyse des mécanismes de compensation mis en jeu montre que dans chacun des cas l'injection d'un signal de correction dans le système de mesure correspond en fait à une injection de charges électriques pondérées neutralisant les charges électriques libérées par les capacités parasites

## Revendications

1. Accéléromètre (50,60,80), comprenant :

   - un détecteur capacitif en silicium (1) formant un système de deux condensateurs (Cs,Ci) variables dont le déséquilibre capacitif est fonction de l'accélération, lesdits condensateurs étant perturbés par des capacités parasites (C1,C2) en parallèle,
   - un système électronique (21,30,26) de mesure du déséquilibre capacitif du détecteur, délivrant une tension de sortie (vs) représentative de l'accélération, et comprenant

     - un étage d'excitation (21), pour appliquer auxdits condensateurs (Cs,Ci) des tensions d'excitation (avs-bv, avs+bv) élaborées par combinaison pondérée d'une tension de référence (v) et de ladite tension de sortie (vs),
     - un étage convertisseur courant/tension (30), pour recueillir des courants issus de chacun desdits condensateurs, délivrant une tension de mesure (vd,vs),
     - une boucle de réaction (26), pour ramener sur l'étage d'excitation (21) ladite tension de mesure (vs,vd), ladite tension de sortie (vs) étant prélevée à la sortie de la boucle de réaction,

     accéléromètre caractérisé en ce qu'il comprend un étage (45,70) de compensation de l'effet perturbateur des capacités parasites (C1,C2), agencé pour injecter dans le système de mesure (21,30,26) un signal électrique de correction (vc,I) élaboré à partir desdites tensions de référence (v) et de mesure (vs,vd) et choisi de manière que ladite tension de sortie (vs) soit sensiblement proportionnelle au rapport de la différence (Cs - Ci) à la somme (Cs + Ci) des capacités desdits condensateurs.

2. Accéléromètre (50,60) selon la revendication 1, dans lequel ledit étage de compensation (45) injecte dans la boucle de réaction (26) une tension de correction (vc, (A-1)vd+Bv) s'ajoutant à la tension de mesure (vd) et choisie pour que la tension de sortie (vs) soit égale à la somme pondérée (Avd+Bv) des tensions de mesure (vd) et de référence (v), les coefficients de pondération (A,B) de la somme pondérée étant des paramètres de réglage de l'étage de compensation.

3. Accéléromètre (50,60) selon la revendication 2, dans lequel ledit étage de compensation (45) comprend un amplificateur opérationnel (46) disposé en série dans la boucle de réaction (26) et monté en additionneur, la sortie de l'amplificateur étant ramenée sur son entrée par une première résistance (47), les tensions de mesure (vd) et de référence (v) étant amenées sur cette même entrée par l'intermédiaire respectivement d'une deuxième (48) et troisième (49) résistance, le rapport de la première à la deuxième résistance et le rapport de la première à la troisième résistance constituant lesdits paramètres de réglage (A,B) de l'étage de compensation.

4. Accéléromètre (50) selon l'une des revendications 1 à 3, dans lequel les tensions de référence (v), de mesure (vd) et de sortie (vs) sont des tensions périodiques.

5. Accéléromètre (60) selon l'une des revendications 1 à 3, dans lequel les tensions de référence (v), de mesure (vd) et de sortie (vs) sont des tensions continues, l'étage d'excitation (21) comprenant des interrupteurs (27,28) de découpage des tensions d'excitation appliquées auxdits condensateurs (Cs,Ci), l'étage convertisseur (30) comprenant un convertisseur courant/tension (31) suivi d'un démodulateur (34).

6. Accéléromètre (80) selon la revendication 1, dans lequel ledit étage de compensation (70) injecte en entrée de l'étage convertisseur (30) un courant de correction (-I) s'ajoutant aux courants recueillis issus desdits condensateurs (Cs,Ci), et choisi pour annuler le courant dû à l'excitation des capacités parasites (C1,C2).

7. Accéléromètre (80) selon la revendication 6, dans lequel ledit courant de correction (-I) est issu de deux condensateurs de compensation (Cn1,Cn2) excités par des tensions respectivement égales à la différence et à la somme d'une tension (dv) proportionnelle à ladite tension de référence (v) et d'une tension (cvs) proportionnelle à ladite tension de mesure (vs), les tensions d'excitation des condensateurs de compensation constituant des paramètres de réglage de l'étage de compensation.

8. Accéléromètre (80) selon la revendication 7, dans lequel lesdites tensions de référence (v), de sortie (vs) et de mesure (vs) sont des tensions continues, les tensions d'excitation des condensateurs du détecteur (Cs,Ci) et des condensateurs de compensation (Cn1,Cn2) étant découpées par des interrupteurs (27,28,75,76) fonctionnant en opposition de phase, l'étage convertisseur (30) comprenant un convertisseur courant/tension (32) suivi d'un démodulateur (34) de gain statique (G) très élevé.

9. Accéléromètre selon l'une des revendications 7 et 8, dans lequel lesdits condensateurs de compensation (Cn1,Cn2) comprennent un sandwich d'une couche d'oxyde de silicium et de deux plaquettes de silicium.

**Patentansprüche**

1. Beschleunigungsmesser (50, 60, 80), welcher umfasst:

   - einen kapazitiven Detektor (1) aus Silizium, der ein System aus zwei variablen Kondensatoren (Cs,Ci) bildet, deren Kapazitätsungleichgewicht eine Funktion der Beschleunigung ist, wobei die genannten Kondensatoren durch parallel-liegende parasitäre Kapazitäten gestört sind,

   - ein elektronisches Meßsystem (21,30,26) zur Messung des kapazitiven Ungleichgewichts des Detektors, wobei das Meßsystem eine die Beschleunigung wiedergebende Ausgangsspannung (vs) erzeugt und umfaßt:

     -- eine Erreger- bzw. Treiberstufe (21) zur Beaufschlagung der genannten Kondensatoren (Cs,Ci) mit Erregungs- bzw. Antriebsspannungen (avs - bv, avs + bv), die durch gewichtete Kombination einer Bezugsspannung (v) und der genannten Ausgangsspannung (vs) gebildet sind,

     -- eine Strom/Spannungs-Wandlerstufe (30), welche von jeweils jedem der genannten Kondensatoren abgegebene Ströme aufnimmt und eine Meßspannung (vd,vs) erzeugt,

     -- eine Rückkopplungsschleife (26) zur Rückführung der genannten Meßspannung (vs,vd) n die Erregungs- bzw. Antriebsstufe (21), wobei die genannte Ausgangsspannung (vs) am Ausgang der Rückkopplungsschleife abgenommen wird,

   **dadurch gekennzeichnet**
   daß der Beschleunigungsmesser eine Kompensationsstufe (45,70) zur Kompensation der Störwirkung der parasitären Kapazitäten (C1,C2) in solcher Ausbildung und Anordnung aufweist, daß in das Meßsystem (21,30,26) ein elektrisches Korrektursignal (vc,I) eingeführt wird, das aus der genannten Bezugsspannung (v) und der genannten Meßspannung (vs,vd) abgeleitet ist und so gewählt ist, daß die genannte Ausgangsspannung (vs) im wesentlichen proportional dem Verhältnis aus der Differenz (Cs - Ci) und der Summe (Cs + Ci) der Kapazitäten der genannten Kondensatoren ist.

2. Beschleunigungsmesser (50,60) nach Anspruch 1, bei welchem die genannte Kompensationsstufe (45) in die Rückkopplungsschleife (26) eine Korrekturspannung (vc, (A - 1) vd + Bv) einführt, welche der Meßspannung (vd) zugefügt wird und so gewählt ist, daß die Ausgangsspannung (vs) gleich der gewichteten Summe (Avd + Bv) der Meßspannung (vd) und der Bezugsspannung (v) ist, wobei die Gewichtungskoeffizienten (A,B) der gewichteten Summe Einstell- bzw. Regelparameter der Kompensationsstufe darstellen.

3. Beschleunigungsmesser (50,60) nach Anspruch 1, bei welchem die genannte Kompensationsstufe (45) einen in der Rückkopplungsschleife (26) in Reihe angeordneten und als Addiervorrichtung geschalteten Operationsverstärker (46) aufweist, dessen Ausgang über einen ersten Widerstand (47) an seinen Eingang rückgeführt ist, wobei die Meßspannung (vd) und die Bezugsspannung (v) vermittels eines zweiten (48) bzw. eines dritten (49) Widerstands dem gleichen Eingang zugeführt werden und das Verhältnis aus dem ersten und dem zweiten Widerstand und das Verhältnis aus dem ersten und dem dritten Widerstand die genannten Einstell- bzw. Regelparameter (A, B) der Kompensationsstufe darstellen.

4. Beschleunigungsmesser (50) nach einem der Ansprüche 1 bis 3, bei welchem die Bezugsspannung (v), die Meßspannung (vd) und die Ausgangsspannung periodische Spannungen sind

5. Beschleunigungsmesser (60) nach einem der Ansprüche 1 bis 3, bei welchem die Bezugsspannung (v), die Meßspannung (vd) und die Ausgangsspannung (vs) Gleichspannungen sind, die Erregungs- bzw. Antriebsstufe (21) Schalter (27,28) zur Unterbrechung der an die genannten Kondensatoren (Cs,Ci) angelegten Erregungs- bzw. Antriebsspannungen aufweist und die Wandlerstufe (30) einen Strom/Spannungs-Wandler (31) mit einem nachfolgenden Demodulator (34) aufweist.

6. Beschleunigungsmesser (80) nach Anspruch 1, bei welchem die Kompensationsstufe (70) am Eingang der Konverter-bzw. Wandlerstufe (30) einen Korrekturstrom (-I) einführt, der zu den von den Kondensatoren (Cs,Ci) kommenden aufgenommenen Strömen hinzugefügt wird und so gewählt ist, daß er den auf die Erregung bzw. Beaufschlagung der parasitären Kapazitäten (C1,C2) zurückzuführenden Strom aufhebt.

7. Beschleunigungsmesser (80) nach Anspruch 6, bei welchem der genannte Korrekturstrom (-I) von zwei Kompensationskondensatoren (Cn1,Cn2) geliefert wird, die mit Spannungen erregt bzw. beaufschlagt werden, die gleich der Differenz und der Summe einer zu der genannten Bezugsspannung (v) proportionalen Spannung und einer zu der genannten Meßspannung (vs) proportionalen Spannung (cvs) sind, wobei die Erregungs- bzw. Beaufschlagungsspannungen der Kompensationskondensatoren Einstell- bzw. Regelparameter der Kompensationsstufe darstellen.

8. Beschleunigungsmesser (80) nach Anspruch 7, bei welchem die genannte Bezugsspannung (v), Ausgangsspannung (vs) und Meßspannung (vs) Gleichspannungen sind und die Erregungs- bzw. Beaufschlagungsspannungen der Detektorkondensatoren (Cs,Ci) und der Kompensationskondensatoren Cn1,Cn2) durch in Gegenphase betriebene Schalter (27,28,75,76) unterbrochen werden, wobei die Konverter- bzw. Wandlerstufe (30) einen Strom/ Spannungswandler (32) mit einem nachfolgenden Demodulator (34) mit sehr hoher statischer Verstärkung (G) aufweist.

9. Beschleunigungsmesser nach einem der Ansprüche 7 und 8, bei welchem die genannten Kompensationskondensatoren (Cn1,Cn2) eine Sandwich-Anordnung aus einer Siliziumoxydschicht und zwei Siliziumplättchen aufweisen.

**Claims**

1. An accelerometer (50, 60, 80), including:

    - a silicon capacitive detector (1) forming a device including two variable capacitors (Cs, Ci) whose capacitive unbalance depends upon the acceleration, said capacitors being impaired by parallel stray capacitances (C1, C2).
    - an electronic device (21, 30, 26) for measuring the capacitive unbalance of the detector, providing an output voltage (vs) representative of the acceleration, and including:

        . an excitation unit (21) to apply to said capacitors (Cs, Ci) exciting voltages (avs-bv, avs+bv) which are a weighted combination of a reference voltage (v) with said output voltage (vs),
        . a current/voltage converting unit (30), to collect the currents from each of said capacitors, providing a measuring voltage (vd, vs),
        . a feedback loop (26), to apply to the excitation unit (21) said measuring voltage (vs, vd), said output voltage (vs) being drawn from the output of the feedback loop,

    said accelerometer being characterized in that it comprises a unit (45, 70) for compensating for the impairing effect of the stray capacitances (C1, C2), that is disposed so as to inject into the measurement system (21, 30, 26) a correcting electric signal (vc, I) generated from said reference voltage (v) and measuring voltage (vs, vd), and selected so that said output voltage (vs) is substantially proportional to the ratio between the difference (Cs-Ci) and the sum (Cs+Ci) of the capacitances of said capacitors.

2. The accelerometer (50, 60) of claim 1, characterized in that said compensation unit (45) injects into the feedback loop (26) a correcting voltage (vc, (A-1)vd+Bv) that is added to the measuring voltage (vd) and is selected so that the output voltage (vs) is equal to the weighted sum (Avd+Bv) of the measuring voltage (vd) and reference voltage (v), the weighting coefficients (A, B) of the weighted sum being adjustment parameters of the compensation unit (45).

3. The accelerometer (50, 60) of claim 2, wherein said compensation unit (45) includes an operational amplifier (46) disposed in series in the feedback loop (26) and connected as an adder, the amplifier output being connected to its input through a first resistor (47), the measuring voltage (vd) and reference voltage (v) being applied to the same input through a second (48) and a third (49) resistor, respectively, the ratio between the first and the second resistors and the ratio between the first and the third resistors constituting said adjustment parameters (A, B) of the compensation unit.

4. The accelerometer (50) of any of claims 1 to 3, wherein the reference voltage (v), the measuring voltage (vd) and the output voltage (vs) are a.c. voltages.

5. The accelerometer (60) of any of claims 1 to 3, characterized in that the reference voltage (v), the measuring voltage (vd) and the output voltage (vs) are d.c. voltages, the excitation unit (21) including switches (27, 28) for chopping the excitation voltages applied to said capacitors (Cs, Ci), the compensation unit (30) including a current/voltage converter (31) followed by a demodulator (34).

6. The accelerometer (80) of claim 1, wherein said compensation unit (70) injects at the input of the compensation unit (30) a correcting current (-I) that is added to the currents drawn from said capacitors (Cs, Ci), and is selected to cancel the current generated by the excitation of the stray capacitances (C1, C2).

7. The accelerometer (80) of claim 6, wherein said correcting current (-I) is provided by two compensation capacitors (Cn1, Cn2) that are excited by voltages respectively equal to the difference and to the sum of a voltage (dv) proportional to said reference voltage (v) and of a voltage (cvs) proportional to said measuring voltage (vs), the excitation voltages of the compensation capacitors constituting adjustment parameters of the compensation unit.

8. The accelerometer (80) of claim 7, wherein said reference voltage (v), output voltage (vs) and measuring voltage (vs) are d.c. voltages, the excitation voltages of the detector's capacitors (Cs, Ci) and of the compensation capacitors (Cn1, Cn2) being chopped by switches (27, 28, 75, 76) operating in phase opposition, the compensation unit (30) including a current/voltage converter (31) followed by a demodulator (34) having a very high static gain (G).

9. The accelerometer of one of claims 7 or 8, wherein said compensation capacitors (Cn1, Cn2) includes a sandwich formed by a silicon oxide layer and two silicon plates.

Fig 1

Fig 2

Fig 3A

Fig 3b

Fig 3c

Fig 4

Fig 5

EP 0 613 012 B1